(19) Europäisches Patentamt
European Patent Office
Office européen des brevets

(11) EP 4 386 670 B1

(12) EUROPEAN PATENT SPECIFICATION

(45) Date of publication and mention of the grant of the patent:
**15.04.2026 Bulletin 2026/16**

(21) Application number: **22214336.4**

(22) Date of filing: **16.12.2022**

(51) International Patent Classification (IPC):
***G06T 7/246*** *(2017.01)*

(52) Cooperative Patent Classification (CPC):
**G06T 7/246;** G06T 2207/10016; G06T 2207/20081; G06T 2207/20084; G06T 2207/30252

# (54) PLANAR OBJECT TRACKING METHOD AND SYSTEM, AND TRAINING METHOD

VERFAHREN UND SYSTEM ZUR VERFOLGUNG PLANARER OBJEKTE UND TRAININGSVERFAHREN

PROCÉDÉ ET SYSTÈME DE SUIVI D’OBJET PLAN, ET PROCÉDÉ D’APPRENTISSAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**19.06.2024 Bulletin 2024/25**

(73) Proprietors:
- **TOYOTA JIDOSHA KABUSHIKI KAISHA**
  **Aichi-Ken 471-8571 (JP)**
- **Czech Technical University in Prague**
  **16627 Praha 6 (CZ)**

(72) Inventors:
- **CHUMERIN, Nikolay**
  **1140 BRUSSELS (BE)**
- **SERYCH, Jonas**
  **16627 PRAGUE 6 (CZ)**
- **MATAS, Jiri**
  **16627 PRAGUE 6 (CZ)**

(74) Representative: **Cabinet Beau de Loménie**
**103, rue de Grenelle**
**75340 Paris Cedex 07 (FR)**

(56) References cited:

- **CHEN ZHENG ET AL: "Local Homography Estimation on User-Specified Textureless Regions", JOURNAL OF COMPUTER SCIENCE AND TECHNOLOGY, SPRINGER SINGAPORE, SINGAPORE, vol. 37, no. 3, 31 May 2022 (2022-05-31), pages 615 - 625, XP037891682, ISSN: 1000-9000, [retrieved on 20220531], DOI: 10.1007/S11390-022-2185-7**
- **TEED ZACHARY ET AL: "RAFT: Recurrent All-Pairs Field Transforms for Optical Flow", 23 August 2020, 16TH EUROPEAN CONFERENCE - COMPUTER VISION - ECCV 2020, PAGE(S) 402 - 419, XP047572216**
- **ZHANG HAOXIAN ET AL: "HVC-Net: Unifying Homography, Visibility, and Confidence Learning for Planar Object Tracking", 23 October 2022, SPRINGER INTERNATIONAL PUBLISHING, PAGE(S) 701 - 718, XP047637603**
- **ZHOU QIANG ET AL: "STN-Homography: Direct Estimation of Homography Parameters for Image Pairs", APPLIED SCIENCES, vol. 9, no. 23, 29 November 2019 (2019-11-29), pages 5187, XP093031105, DOI: 10.3390/app9235187**
- **CAO WENMING ET AL: "Weighted Optical Flow Prediction and Attention Model for Object Tracking", IEEE ACCESS, vol. 7, 30 September 2019 (2019-09-30), pages 144885 - 144894, XP011750248, DOI: 10.1109/ ACCESS.2019.2944649**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 386 670 B1

## Description

BACKGROUND OF THE INVENTION

1. Field of the Invention

The present disclosure relates to a method for tracking planar objects between images. Further, the present disclosure relates to a system for implementing such method.

2. Description of Related Art

Planar object tracking methods are commonly used in specific applications, and therefore specifically trained to detect a certain kind of planar object.

For instance, applications of planar object tracking include tracking of license plate (number plate) of vehicles, or tracking of road signs.

In this context, however, conventional planar object tracking methods may underperform when tracking unknown and unexpected planar objects.

Consequently, such conventional planar object tracking methods are not desirable for applications such as autonomous driving of a vehicle, wherein unknown and unexpected objects on the road surface must be tracked to ensure safe driving of the vehicle.

The following references disclose various technologies related to planar object tracking.

[REF 1] Anastasiia Mishchuk, Dmytro Mishkin, Filip Radenovic, and Jiri Matas. Working hard to know your neighbor's margins: Local descriptor learning loss. In Advances in Neural Information Processing Systems, pages 4826-4837, 2017.

[REF 2] David G Lowe. Distinctive image features from scale-invariant keypoints. International journal of computer vision, 60(2):91-110, 2004.

[REF 3] Daniel DeTone, Tomasz Malisiewicz, and Andrew Rabinovich. Deep image homography estimation. arXiv preprint arXiv:1606.03798, 2016.

[REF 4] Martin A Fischler and Robert C Bolles. Random sample consensus: a paradigm for model fitting with applications to image analysis and automated cartography. Communications of the ACM, 24(6):381-395, 1981.

[REF 5] Maksym Ivashechkin, Daniel Barath, and Jiri Matas. USACv20: robust essential, fundamental and homography matrix estimation. In Proceedings of the 25st Computer Vision Winter Workshop Conference, 2020.

[REF 6] Lowe, D.G. Distinctive Image Features from Scale-Invariant Keypoints. International Journal of Computer Vision 60, 91-110 (2004).

[REF 7] Bay H., Tuytelaars T., Van Gool L. (2006) SURF: Speeded Up Robust Features. In: Leonardis A., Bischof H., Pinz A. (eds) Computer Vision - ECCV 2006. ECCV 2006. Lecture Notes in Computer Science, vol 3951. Springer, Berlin, Heidelberg.

[REF 8] Ma, Z., Wang, L., Zhang, H., Lu, W., & Yin, J. (2020, August). RPT: Learning point set representation for Siamese visual tracking. In European Conference on Computer Vision (pp. 653-665). Springer, Cham.

[REF 9] R. Richa, R. Sznitman, R. Taylor and G. Hager, Visual tracking using the sum of conditional variance, 2011 IEEE/RSJ International Conference on Intelligent Robots and Systems, 2011, pp. 2953-2958.

[REF 10] Liang, P., Ji, H., Wu, Y., Chai, Y., Wang, L., Liao, C., & Ling, H. (2021). Planar object tracking benchmark in the wild. Neurocomputing, 454, 254-267.

[REF 11] Chen, L., Ling, H., Shen, Y., Zhou, F., Wang, P., Tian, X., & Chen, Y. (2019). Robust visual tracking for planar objects using gradient orientation pyramid. Journal of Electronic Imaging, 28(1), 013007.

[REF 12] Teed, Z., & Deng, J. (2020, August). Raft: Recurrent all-pairs field transforms for optical flow. In European conference on computer vision (pp. 402-419). Springer, Cham.

[REF 13] Hui, T. W., Tang, X., & Loy, C. C. (2020). A lightweight optical flow CNN-Revisiting data fidelity and regularization. IEEE transactions on pattern analysis and machine intelligence, 43(8), 2555-2569.

[REF 14] Liang, P., Wu, Y., Lu, H., Wang, L., Liao, C., & Ling, H. (2018, May). Planar object tracking in the wild: A benchmark. In 2018 IEEE International Conference on Robotics and Automation (ICRA) (pp. 651-658). IEEE.

[REF 15] Zhan, X., Liu, Y., Zhu, J., & Li, Y. (2022, June). Homography decomposition networks for planar object tracking. In Proceedings of the AAAI Conference on Artificial Intelligence (Vol. 36, No. 3, pp. 3234-3242).

[REF 16] CHEN, Zheng, FANG, Xiao-Nan, et ZHANG, Song-Hai. Local homography estimation on user-specified textureless regions. Journal of Computer Science and Technology, 2022, vol. 37, no 3, p. 615-625.

[REF 17] TEED, Zachary et DENG, Jia. Raft: Recurrent all-pairs field transforms for optical flow. In : Computer Vision-ECCV 2020: 16th European Conference, Glasgow, UK, August 23-28, 2020, Proceedings, Part II 16. Springer International Publishing, 2020. p. 402-419.
[REF 18] ZHANG, Haoxian et LING, Yonggen. Hvc-net: Unifying homography, visibility, and confidence learning for planar object tracking. In : European Conference on Computer Vision. Cham : Springer Nature Switzerland, 2022. p. 701-718.

## SUMMARY OF THE INVENTION

According to aspects of the present disclosure, a planar object tracking method for tracking objects between two images as described in claim 1 is provided.

In the present description, an optical flow correspondence between a first image and a second image is a correspondence between a position (of a pixel) in the first image and a position (of a pixel) in the second image, i.e. corresponding positions. Such corresponding positions may for example be calculated based on features extracted from the first image and features extracted from the second image.

Advantageously, in the method according to the present disclosure, the estimation of optical flow correspondences is a dense estimation, i.e. an estimation based on dense features extraction in the first image and the second image. This means that all or most of the pixels of the images are used to extract features based on which the optical flow correspondences are calculated.

An optical flow correspondence between a position of a pixel from the first image and a position of a pixel from the second image corresponds to a situation wherein said pixels show parts of images corresponding to the same physical entities.

Dense optical flow correspondence estimation can also be understood as opposed to computing the correspondence estimation on a pre-selected subset of pixel positions.

The planar object tracking method according to an aspect of the present disclosure assigns a weight to each optical flow correspondence and a planar homography is estimated based on such weights. The weights provide a way to introduce a relative hierarchy between the optical flow correspondences regarding the impact of such optical flow correspondences on the calculation of the planar homography. Consequently, optical flow correspondences with different weights can be taken into account differently in order to have different impacts on the planar homography calculation, which provides a very efficient planar object tracking method.

Higher weights are advantageously assigned to reliable optical flow correspondences on which it is preferable to calculate the planar homography. Further, lower weights are advantageously assigned to incorrect or unreliable optical flow correspondences. With such method, it is therefore unnecessary to use robust outlier detection algorithms, for example such as Random Sample Consensus (RANSAC) algorithms (see [REF 4]).

Further, in the method according to the present disclosure, the combined use of dense optical flow correspondence estimation and planar homography estimation based on the weights of the optical flows makes it possible to efficiently track unexpected objects. In particular, the present method was evaluated on commonly used benchmarks, such as the POT-210 dataset (see [REF 14]) and the POIC dataset (see [REF 11]), achieving high accuracy and robustness.

Further, the method according to the present description is fully differentiable, meaning that each step of the method is differentiable. Such differentiable feature allows for using predictor models for performing steps of the method that can be trained using machine learning techniques, such as backpropagation and gradient descent.

The planar homography calculation comprises a step of calculating a weighted least square regression based on the weights of the optical flow correspondences.

According to embodiments, the weights of the optical flow correspondences are comprised between 0 and 1.

According to embodiments, the dense estimation of optical flow correspondences comprises utilizing an optical flow predictor model; and the assignation of weights to the optical flow correspondences comprises utilizing a weight predictor model, wherein each weight is calculated based on an inner representation of the optical flow predictor model.

In the present description, predictor models are neural networks wherein input data is processed through a plurality of layers. Intermediate feature maps (multi-dimensional tensors) are generated between successive layers. In the present description, such intermediate feature maps are referred to as inner representations of the neural networks, i.e. inner representations of the predictor models. Such inner representations may also be referred to as latent spaces.

The predictor models may be, for example, convolutional neural networks (CNN) or recurrent neural networks (RNN).

According to embodiments, the inner representation of the optical flow predictor model is a cost volume matrix between features extracted from the first image and features extracted from the second image.

In the present description, a cost volume matrix is defined as a matrix in which each matrix element comprises a descriptor distance between extracted features of a position in the first image and extracted features of a position in the second image.

In the present description, a descriptor distance is a distance (for example a Euclidean distance) between descriptors describing features of an image. The descriptors may be, for example, vectors of numbers describing appearance of pixels and neighboring pixels.

For example, a cost volume matrix of the first and second image may be a matrix wherein each row corresponds to a position in the first image and each column corresponds to a position in a second image. A value of an element of the cost volume value matrix at a predetermined row and a predetermined column represents a similarity between the position corresponding to said predetermined row in the first image and the position corresponding to said predetermined column in the second image. For example the first row of the cost volume matrix corresponds to similarities between the first position in the first image and every position in the second image.

Advantageously, the weight predictor model according to the present disclosure resembles a keypoint-detector with an output that includes information from both the first image and the second image, therefore providing low weights on incorrect matches, on occlusions or on significant appearance changes between the first image and the second images.

The step of dense estimation of optical flow correspondences comprises using a LITEFLOWNET2 method. The inventors have shown that such LITEFLOWNET2 method is particularly adapted to the planar object tracking method according to the present disclosure so that performance of the planar object tracking method is enhanced.

According to embodiments, a planar object tracking system for tracking objects between a first image and a second image is provided. The planar object tracking system comprising one or more processors and a computer-readable medium; the computer-readable medium comprising computer instructions stored therein, wherein the instructions, when executed by the one or more processors, cause the one or more processors to carry out the steps of:

- using an optical flow predictor model to estimate dense optical flow correspondences (i.e. for dense estimation of optical flow correspondences) between the first image and the second image based on features extracted from the first image and from the second image;
- using a weight predictor model to assign weights to the optical flow correspondences, wherein the weight of each optical flow correspondence is calculated to characterize a reliability of the estimation of the optical flow correspondence.
- calculating a planar homography between the first image and the second image based on the optical flow correspondences, wherein optical flow correspondences are taken into account differently in the calculation based on the weights.

According to embodiments, the present disclosure further relates to a vehicle comprising the above-mentioned planar object tracking system

According to embodiments, the present disclosure further relates to a method of training the above-mentioned planar object tracking system, such method of training comprising steps of:

- providing a training image pair;
- estimating dense optical flow correspondences between images of the training image pair using an optical flow predictor model;
- assigning weights to the optical flow correspondences using a weight predictor model; and
- calculating a planar homography between images of the training image pair based on the optical flow correspondences, wherein optical flow correspondences are taken into account differently in the calculation based on the weights;
- evaluating performance of the calculated planar homographies using a loss function;

wherein the optical flow predictor model and the weight predictor model are trained simultaneously to provide output optical flow correspondences and output weights, so that planar homographies calculated based on such output optical flow correspondences and such output weights minimize the loss function in order to obtain predetermined performance.

In such training method, the optical flow predictor model and the weight predictor model are trained simultaneously in an end-to-end fashion using a single common loss function. Therefore, it is possible to train the optical flow predictor model and the weight predictor model using a loss function directly encoding the quality of the final estimated geometric model (the result of the planar homography). Such process is not possible, for example, with methods of the prior art that are not fully differentiable, such as RANSAC.

Further, as each step of the above-mentioned planar object tracking method is differentiable, it is also possible to train the optical flow predictor model and the weight predictor model independently. In particular, it is also possible to, first, train the weight predictor model alone and, second, train both the optical flow predictor model and the weight predictor model.

According to embodiments, the single loss function is a function of a difference between the calculated homography and a predetermined ground truth homography of the training image pair.

According to embodiments, the training image pair comprises a first training image selected from a training dataset and a second training image that is calculated by applying a predetermined warping transformation to the first training image.

By "warping" is here understood reversible distortion of the image. In particular, when warping is based on planar homography, the distortion involves a combination of scale, rotation, translation and perspective distortion of the frame.

The present disclosure is further related to a computer program including instructions for executing the steps of the above described planar object tracking method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described planar object tracking method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

## BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a schematic view showing a vehicle comprising a planar object tracking system, in accordance with the present disclosure;
FIG. 2 is a diagram representing aspects of a planar object tracking method according to embodiments of the present disclosure;
FIG. 3 is a block diagram of a training method according to embodiments of the present disclosure; and
FIGS. 4 is a graph illustrating advantages of the method according to the present disclosure over other methods.

## DETAILED DESCRIPTION OF EMBODIMENTS

Reference will now be made in detail to a planar object tracking system and a planar object tracking method constituting exemplary embodiments of the present disclosure.

The planar object tracking system and method according to the present disclosure aim at providing a planar homography between two images of a series of images of a scene acquired, for example by a camera. Such images may be, for example, successive images.

Embodiments of the planar object tracking method and system will be described with reference to Fig. 1 and Fig. 2, respectively. Further, embodiments of a method of training the planar object tracking system will be described with reference to Fig. 3.

The planar object tracking system POTS is implemented on a central driving computer 10 ('computer 10'). Computer 10 comprises a non-transitory storage medium 11 and one or more processor(s) 12. The one or more processors 12 are intended to be representative of the presence of any one or 10 more processors or processing devices, of any of a variety of forms. In addition, although computer 10 is represented on Fig. 1 in a single box, it may be a distributed calculation system, comprising a plurality of processors, possibly physically arranged on different locations.

The vehicle V is a car with an autonomous driving system, which represents a non-limiting example of a vehicle or a robot. The autonomous driving system ADS of vehicle V is configured to drive vehicle V in fully autonomous mode based mainly on the predictions outputted by the planar object tracking system POTS.

Other embodiments of the present disclosure may relate to cars with varying levels of autonomous driving systems, including cars with a limited level of autonomous driving.

Most of the components and functional units of the autonomous driving system ADS are on-board vehicle V; however, part of them can be remote components, and can be for instance part of a remote server. Such remote server may, for example, be used to train the planar object tracking system remotely.

The ADS system further comprises a set of sensors 20, each sensor being connected to computer 10, a set of actuators 30 (not shown), and other components. The set of sensors 20 comprises in particular sensors configured to perceive an external environment of the vehicle V, which include a front camera 21, a rear camera 22, two lateral cameras 23 and 24, and a roof-mounted lidar 25. The cameras are configured to cover a 360° angle around vehicle V.

The set of sensors 20 also comprises a set of sensors to monitor the state of the car, such as an inertial measurement unit, a rotation speed sensor for measuring the speed of rotation of the front wheels, etc.

In reference to Fig. 2, embodiments of a planar object tracking method according to the present disclosure may comprise the main processing steps of: S10 dense estimation of optical flow correspondences, S20 assignation of weights to the optical flow correspondences, and S30 planar homography calculation.

**S10: Dense estimation of optical flow correspondences**

In a first step S10, referred to as the dense estimation of optical flow correspondences, two images of a scene are taken as input of an optical flow correspondence estimation algorithm in order to estimate dense optical flow correspondences between the pixels of the two images, i.e. corresponding positions between the pixels of the first image and the pixels of the second image. Such corresponding positions may be calculated, for example, based on features extracted from the first image and features extracted from the second image.

An optical flow correspondence may, for example, comprise a couple of vectors ($\overrightarrow{\boldsymbol{p}_1}$, $\overrightarrow{\boldsymbol{p}_2}$) characterizing a correspondence between a position, $\overrightarrow{p_1} = (x_{1,i}, y_{1,i})$, in the first image (defined by coordinates $x_{1,i}$ and $y_{1,i}$), and a position, $\overrightarrow{\boldsymbol{p}_2} = (x_{2,i}, y_{2,i})$, in the second image (defined by coordinates $x_{2,i}$ and $y_{2,i}$), where, $i$, is an index characterizing the optical flow correspondence.

The first step S10 may comprise a step of calculating optical flow vectors between pixels of the first image and pixels of the second image. An optical flow vector may be expressed as a vector pointing from the first position of the optical flow correspondence to the second position of the optical flow correspondence.

Each of the calculated optical flow vectors may characterize a motion of an object or a part of an object between a pixel in the first image and a pixel in the second image. It may occur that a pixel in the first image does not have a corresponding pixel in the second image, therefore, in this case, the resulting optical flow vector associated with such pixel does not point toward a pixel of the second image but points outside of the second image.

Optical flow vectors between the first image and the second image may be calculated from the optical flow correspondences between the first image and the second image.

According to embodiments, the dense estimation of optical flow correspondences is implemented by an optical flow predictor model that may be a neural network. Such neural network processes an input through a plurality of layers. Inner representations of the inputs of the neural network (multi-dimensional tensors) are generated between successive layers.

**S20: Assignation of weights to the optical flow correspondences**

In step S20, referred to as the assignation of weights to the optical flow correspondences, a second algorithm is used to calculate a weight, $w_i$, for each optical flow correspondence estimated by the step S10, where, i, is the index characterizing the optical flow correspondence. The weight is calculated in order to characterize the reliability of an optical flow correspondence obtained from the first step S10. Lower weights are assigned to optical flow correspondences that are incorrect or unreliable. The weights can therefore be used as multiplying factors to select a sub-set of optical flows on which to preferably base the estimation the planar homography between the two images. For example, the weights of the optical flows corresponding to outliers are assigned to values close to zero and it is not necessary to use a robust outlier detection algorithm.

In embodiments, an inner representation of the inputs of the optical flow predictor model is provided to the weight estimation model in order to calculate and assign the weights to the optical flow correspondences.

**S30: Planar homography calculation**

In step S30, a planar homography between the two images is calculated from the optical flow correspondences and the associated (assigned) weights. In embodiments, it is contemplated to obtain a homography matrix, **H,** which maps $(x_{1,i}, y_{1,i}, 1)$ to $(\lambda.\, x_{2,i}, \lambda.\, y_{2,i}, \lambda)$ where $\lambda$ is a real number characterizing the homography. Generally, the homography matrix, **H,** is a 3 by 3 matrix, because the images comprise pixels characterized by two coordinates.

This generally leads to an over-determined homogeneous system of equations that can be expressed as follows:

$$\boldsymbol{A}.\boldsymbol{h} = \boldsymbol{0} \qquad \text{(Equation 1)}$$

where $\boldsymbol{h}$ is the flattened version of the homography matrix that is sought, and $\boldsymbol{A}$ is the constraint matrix which encodes the data constraints obtained from the motion of features between a first image and a second image.

The system of Equation 1 may be solved in the least-square sense via a singular value decomposition (SVD) of the constraint matrix **A.** Such singular value decomposition may be implemented with various frameworks, for example a machine learning framework that includes a differentiable SVD solver.

In embodiments, the planar homography is constrained by fixing its bottom-right element $h_{3,3}$ to a predetermined value, for example equal to 1, in order to obtain a non-homogeneous system which can be solved in the least-square sense using a QR decomposition with stable gradients. The non-homogeneous system may be expressed as follows.

$$\tilde{\boldsymbol{A}}.\tilde{\boldsymbol{h}} = \boldsymbol{b} \qquad \text{(Equation 2)}$$

where $\tilde{\boldsymbol{h}}$ is a modified homography matrix, $\tilde{\boldsymbol{A}}$ is a modified constraint matrix, and **b** is a matrix of constants, respectively.

In a non-homogeneous formulation such as Equation 2, each optical flow correspondence adds a pair of equations into $\tilde{\boldsymbol{A}}$ and $\boldsymbol{b}$. In particular, a correspondence adds two rows in the modified constraint matrix, $\tilde{\boldsymbol{A}}$, and two elements in the matrix of constants, **b,** which are related by Equation 2. Advantageously, each pair of equations may be weighted using a weight calculated by a weight predictor model.

In embodiments, the modified homography matrix $\tilde{\boldsymbol{h}}$ is obtained by calculating a weighted least square regression that can be expressed as follows.

$$\min_{\tilde{\boldsymbol{h}}} \sum_{i=1}^{2N} \boldsymbol{w}_i . \left\| \tilde{\boldsymbol{A}}_i . \tilde{\boldsymbol{h}} - \boldsymbol{b}_i \right\|^2 \qquad \text{(Equation 3)}$$

As the exact solving of Equation 2 may be difficult, for example due to measurement noise, the method according to the present disclosure proceeds by seeking a modified homography that minimizes a (squared) difference between $\tilde{\boldsymbol{A}}.\tilde{\boldsymbol{h}}$ and $\boldsymbol{b}$. The squared differences are weighted by the weights assigned to each of the optical flow correspondences, meaning that a tight closeness of $\tilde{\boldsymbol{A}}_i.\tilde{\boldsymbol{h}}$ and $\boldsymbol{b}_i$ is enforced for correspondences that have higher weights ($\boldsymbol{w}_i$ close to 1) while differences between $\tilde{\boldsymbol{A}}_i.\tilde{\boldsymbol{h}}$ are allowed to be larger for correspondences that have lower weights ($\boldsymbol{w}_i$ close to 0).

The weighted least square regression of Equation 3 may be rewritten as an apparent non-weighted least square regression by multiplying each row of the modified constraint matrix and each element of the matrix of constants by the square root of the corresponding weight, $\sqrt{w_i}$ , as follows. Therefore, the planar homography is easier to calculate when using Equation 4 than when using Equation 3.

$$\min_{\tilde{\boldsymbol{h}}} \sum_{i=1}^{2N} \left\| \left(\sqrt{\boldsymbol{w}_i}.\tilde{\boldsymbol{A}}\right)_i . \tilde{\boldsymbol{h}} - \left(\sqrt{\boldsymbol{w}_i}.\boldsymbol{b}_i\right) \right\|^2 \qquad \text{(Equation 4)}$$

**Training of the planar object tracking system**

The planar object tracking system according to the present description may be trained using a training method described hereafter.

In reference to Fig. 3, embodiments of the training method may comprise the main processing steps of: S100: providing a training image pair to an optical flow predictor model, S110: estimating dense optical flow correspondences using an optical flow predictor model, S 120: assigning weights to the optical flow correspondences using a weight predictor model, S 130: calculating a planar homography of the training image pair; S140: evaluating performance of the calculation of the planar homography using a loss function.

In step S 100, training image pairs are provided to an optical flow predictor model. The training image pairs may comprise a pair of known images on which the planar object tracking method is trained to calculate a planar homography. In embodiments, the training image pairs comprise a first "reference" image and a second "warped" image.

The reference image may be, for example, an image from a known image dataset such as the COCO dataset, as disclosed in Lin, T. Y., Maire, M., Belongie, S., et al. (2014, September). Microsoft COCO: Common objects in context. In European conference on computer vision (pp. 740-755). Springer, Cham.

In embodiments, an image may be randomly selected in a known image dataset.

The second "warped" image may be a warped version of the first reference image, i.e. an image obtained after performing a predetermined warping geometric transformation on the first image. In particular, the warping transformation may comprise a randomly generated homography of the first image.

In embodiments, a predetermined homography is generated by perturbating a corner of first reference image with a random vector of length up to 20% of the image diagonal. Further, the second image may be blurred.

In embodiments, the first image and the second image may be processed through a compression stage, for example a JPEG compression stage.

In step S110, dense optical flow correspondences are estimated in the input training image pair. Such dense estimation is performed with an optical flow predictor model. The optical flow predictor model is a neural network. Such neural networks is a LITEFLOWNET2 algorithm.

In step S120, weights of the optical flow correspondences are estimated and assigned using a weight predictor model. The weight predictor model may be a neural network. Further, the weight predictor model may take as an input an inner representation of the optical flow predictor model and generate a weight for every optical flow correspondences of the images of the training image pair.

In step S130: a planar homograpy of the training image pair is calculated based on the optical flow correspondences and the corresponding assigned weights that are calculated with the optical flow predictor model and the weight predictor model. The planar homography is calculated using a weighted least square regression, wherein the weights are the weights assigned by the weight predictor model.

In step S140: performance of the calculated planar homography is evaluated using a loss function. As an example, the single loss function may be written as follows:

$$L(H) = \frac{1}{N}\sum_{i=1}^{N}\left\|p_i - \mathcal{M}(H^{-1}H_{GT}, p_i)\right\|^2 \qquad \text{(Equation 5)}$$

where $H_{GT}$ is a ground truth homography of the training image pair, and $\mathcal{M}(H^{-1}H_{GT}, p_i)$ is a homography function performing a homography transformation of a known position vector $p_i$, based on a known homography matrix $H^{-1}H_{GT}$.

For example, the ground truth homography may be the known warping transformation used to generate a second image of a training image pair based on a first reference image.

In embodiments, the optical flow predictor model and the weight predictor model may be trained simultaneously using such single loss function without additional direct supervision of the weight predictor model.

In embodiments, the models are trained using back-propagation, and a stochastic gradient descent. As the models are differentiable, the information about the loss that is obtained at the output of the model may be back-propagated through the models. This back-propagation process informs each trainable parameter of the models on how it needs to be changed in order to cause improvement of the quality of the estimations via the models. The trainable parameters of the models are updated accordingly and the training process is repeated a plurality of times.

**Exemplary embodiment using a RAFT algorithm**

In an exemplary embodiment, the optical flow prediction model may be based on recurrent all-pairs field transforms (RAFT) algorithm for optical flow correspondences, see [REF 12].

A RAFT algorithm computes an optical flow correspondence from a pair of images by calculating, as an inner representation, a (correlation) cost volume capturing similarity between pairs of descriptors extracted from the pair of images.

In embodiments of the method according to the present description, the cost volume calculated by the RAFT is used, as an input, in the weight predictor model to calculate the weight of each optical flow correspondence. In particular, for each optical flow correspondence, a 4-layer correlation pyramid is constructed based on the cost volume and 9-by-9 patches are sampled from this correlation pyramid in order to obtain a 9x9x4 feature map for each optical flow correspondence.

Further, an additional channel comprising a mean cost volume response for a given position of the optical flow may be appended to the feature map. The resulting appended feature map (of dimension 9x9x5) may subsequently be processed by a 3-layer convolutional neural network (CNN), possibly followed by a single output channel convolution, and by an average pooling. Finally the results are up-sampled and processed through sigmoid activation in order to get a weight map comprising weights between 0 and 1.

In such embodiment, the weight of each optical flow correspondence is calculated based on the cost volume provided by the RAFT algorithm.

Although the above embodiment utilizes a cost volume provided by a RAFT algorithm to compute the weight of the optical flow correspondence, the present method is compatible with any differentiable means of calculating a weight that characterizes a reliability of an optical flow correspondence.

As an example, the inventors have demonstrated that the method according to the present disclosure may comprise a calculation of the weights based on a correlation volume provided by a LITEFLOWNET2 algorithm (see [REF 13]).

In embodiments, the CNN used during the weight estimation process is trained on synthetic datasets of image pairs. The synthetic datasets may be generated, for example, by selecting a plurality of images from a known image datasets in a random mannder, and by warping such images with two random homographies. One of the homographies is used to generate the template (reference) image and the other homography is used to generate the image representing the displaced image.

As an example, the CNN may be trained on a large number of image pairs (for example 50000 image pairs) randomly selected from the COCO dataset. The selected images may be warped with two random homographies generated by perturbing each image corner by a random vector of length up to 20% of the image diagonal. The image representing the displaced image may additionally be blurred by a random linear motion of length up to 20 pixels. The generated image pair may subsequently be passed through JPEG compression with quality set to 25.

Fig. 4 is a graph illustrating the precision of planar object tracking with respect to the alignment error threshold for a tracking method utilizing an embodiment of the present method tested on a test sample of the POT-210 dataset (see [REF 14]). The illustrated embodiment corresponds to a case wherein a RAFT algorithm is used as an optical flow predictor model and a weighted least square regression is used for the calculation of the planar homography, such embodiment being referred to as "weighted optical flow tracker" (WOFT). Such embodiment is represented by a bold line.

Results obtained with other planar object tracking methods of the prior art are also represented with dotted lines, for the sake of comparison. SIFT and LISRD refer to methods disclosed, for example, in [REF 10]. HDN refers to the method disclosed, for example, in [REF 15].

With reference to Fig. 4, it can be seen that the planar object tracking according to the present disclosure performs better that methods of the prior art on the POT-210 dataset.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A computer-implemented planar object tracking method for tracking objects between a first image and a second image, the method comprising steps of:

   - (S10) dense estimation of optical flow correspondences between the first image and the second image based on features extracted from the first image and from the second image;
   - (S20) assignation of weights to the optical flow correspondences, wherein the weight of each optical flow correspondence is calculated to characterize a reliability of the estimation of the optical flow correspondence;
   - (S30) planar homography calculation between the first image and the second image based on the optical flow correspondences, wherein optical flow correspondences are taken into account differently in the calculation based on the weights, wherein

   the dense estimation of optical flow correspondences (S10) comprises using a LITEFLOWNET2 method; and the planar homography calculation (S30) comprises calculating a weighted least square regression based on the weights of the optical flow correspondences.

2. The method of claim 1, wherein:

   - the weights of the optical flow correspondences are comprised between 0 and 1.

3. The method of claim 1 or 2, wherein:

   - the dense estimation of optical flow correspondences (S10) comprises utilizing an optical flow predictor model; and
   - the assignation of weights of the optical flow correspondences (S20) comprises utilizing a weight predictor model, wherein each weight is calculated based on an inner representation of the optical flow predictor model.

4. The method of claim 3, wherein:

   - the inner representation of the optical flow predictor model is a cost volume matrix between features extracted from the first image and features extracted from the second image.

5. A planar object tracking system (10) for tracking objects between a first image and a second image, the planar object tracking system comprising one or more processors (12) and a computer-readable medium (11); the computer-readable medium (11) comprising computer instructions stored therein, wherein the instructions, when executed by the one or more processors, cause the one or more processors to carry out the steps of:

- using an optical flow predictor model to estimate dense optical flow correspondences (S10) between the first image and the second image based on features extracted from the first image and from the second image;
- using a weight predictor model to assign weights (S20) to the optical flow correspondences, wherein the weight of each optical flow correspondence is calculated to characterize a reliability of the estimation of the optical flow correspondence;
- calculating a planar homography (S30) between the first image and the second image based on the optical flow correspondences, wherein optical flow correspondences are taken into account differently in the calculation based on the weights, wherein the dense estimation of optical flow correspondences (S10) comprises using a LITEFLOWNET2 method; and the planar homography calculation (S30) comprises calculating a weighted least square regression based on the weights of the optical flow correspondences.

6. A method of training the planar object tracking system of claim 5, comprising steps of:

- (S100) providing a training image pair;
- (S110) estimating dense optical flow correspondences between images of the training image pair using an optical flow predictor model;
- (S120) assigning weights to the optical flow correspondences using a weight predictor model;
- (S130) calculating a planar homography between images of the training image pair based on the optical flow correspondences, wherein optical flow correspondences are taken into account differently in the calculation based on the weights;
- (S140) evaluating performance of the calculated planar homographies using a loss function;

wherein the optical flow predictor model and the weight predictor model are trained simultaneously to provide output optical flow correspondences and output weights, so that planar homographies calculated based on such output optical flow correspondences and such output weights minimize the loss function in order to obtain predetermined performance.

7. The method of claim 6, wherein:

- the loss function is a function of a difference between the calculated homography and a predetermined ground truth homography of the training image pair.

8. The method of any of claims 6 to 7, wherein:

- the training image pair comprises a first training image selected from a training dataset and a second training image that is calculated by applying a predetermined warping transformation to the first training image.

9. A computer program comprising instructions which, when the program is executed by a computer, cause the computer to carry out the steps of the planar object tracking method of any of claims 1 to 4.

10. A computer-readable storage medium comprising instructions which, when executed by a computer, cause the computer to carry out the steps of the planar object tracking method of any of claims 1 to 4.

11. A vehicle comprising a planar object tracking system according to claim 5.

## Patentansprüche

1. Computerimplementiertes Verfahren zur Verfolgung planarer Objekte zwischen einem ersten Bild und einem zweiten Bild, das Verfahren umfassend die folgenden Schritte:

- (S10) dichtes Schätzen von optischen Flusskorrespondenzen zwischen dem ersten Bild und dem zweiten Bild basierend auf Merkmalen, die aus dem ersten Bild und dem zweiten Bild extrahiert werden;

- (S20) Zuweisen von Gewichten zu den optischen Flusskorrespondenzen, wobei das Gewicht jeder optischen Flusskorrespondenz berechnet wird, um eine Zuverlässigkeit der Schätzung der optischen Flusskorrespondenz zu charakterisieren;
- (S30) Berechnen planarer Homographie zwischen dem ersten Bild und dem zweiten Bild basierend auf den optischen Flusskorrespondenzen, wobei optische Flusskorrespondenzen bei der Berechnung basierend auf den Gewichten unterschiedlich berücksichtigt werden, wobei
das dichte Schätzen optischer Flusskorrespondenzen (S10) ein Verwenden eines LITEFLOWNET2-Verfahrens umfasst; und
das Berechnen planarer Homographie (S30) ein Berechnen einer gewichteten Regression kleinster Quadrate basierend auf den Gewichten der optischen Flusskorrespondenzen umfasst.

**2.** Verfahren nach Anspruch 1, wobei:

- die Gewichte der optischen Flusskorrespondenzen zwischen 0 und 1 liegen.

**3.** Verfahren nach Anspruch 1 oder 2, wobei:

- das dichte Schätzen optischer Flusskorrespondenzen (S10) ein Verwenden eines Vorhersagemodell für optischen Fluss umfasst; und
- das Zuweisen von Gewichten der optischen Flusskorrespondenzen (S20) ein Verwenden eines Gewicht-Vorhersagemodells umfasst, wobei jedes Gewicht basierend auf einer inneren Darstellung des Vorhersagemodells für optischen Fluss berechnet wird.

**4.** Verfahren nach Anspruch 3, wobei:

- die innere Darstellung des Vorhersagemodells für optischen Fluss eine Kostenvolumenmatrix zwischen Merkmalen, die aus dem ersten Bild extrahiert werden, und Merkmalen, die aus dem zweiten Bild extrahiert werden, ist.

**5.** System zur Verfolgung planarer Objekte (10) zum Verfolgen von Objekten zwischen einem ersten Bild und einem zweiten Bild, das System zur Verfolgung planarer Objekte umfassend einen oder mehrere Prozessoren (12) und ein computerlesbares Medium (11); das computerlesbare Medium (11) umfassend darin gespeicherte Computeranweisungen, wobei die Anweisungen, wenn sie von dem einen oder den mehreren Prozessoren ausgeführt werden, den einen oder die mehreren Prozessoren veranlassen, die folgenden Schritte durchzuführen:

- Verwenden eines Vorhersagemodells für optischen Fluss, um dichte optische Flusskorrespondenzen (S10) zwischen dem ersten Bild und dem zweiten Bild basierend auf Merkmalen zu schätzen, die aus dem ersten Bild und dem zweiten Bild extrahiert werden;
- Verwendung eines Gewicht-Vorhersagemodells zum Zuweisen von Gewichten (S20) zu den optischen Flusskorrespondenzen,
wobei das Gewicht jeder optischen Flusskorrespondenz berechnet wird, um eine Zuverlässigkeit der Schätzung der optischen Flusskorrespondenz zu charakterisieren;
- Berechnen einer planaren Homographie (S30) zwischen dem ersten Bild und dem zweiten Bild basierend auf den optischen Flusskorrespondenzen, wobei optische Flusskorrespondenzen bei der Berechnung basierend auf den Gewichten unterschiedlich berücksichtigt werden, wobei das dichte Schätzen optischer Flusskorrespondenzen (S10) ein Verwenden eines LITEFLOWNET2-Verfahrens umfasst; und das Berechnen planarer Homographie (S30) ein Berechnen einer gewichteten Regression kleinster Quadrate basierend auf den Gewichten der optischen Flusskorrespondenzen umfasst.

**6.** Verfahren zum Trainieren des Systems zur Verfolgung planarer Objekte nach Anspruch 5, umfassend die folgenden Schritte:

- (S100) Bereitstellen eines Trainingsbildpaars;
- (S110) Schätzen dichter optischer Flusskorrespondenzen zwischen Bildern des Trainingsbildpaars unter Verwendung eines Vorhersagemodells für optischen Fluss;
- (S120) Zuweisen von Gewichten zu den optischen Flusskorrespondenzen unter Verwendung eines Gewicht-Vorhersagemodells;
- (S130) Berechnen einer planaren Homographie zwischen Bildern des Trainingsbildpaars basierend auf den optischen Flusskorrespondenzen, wobei optische Flusskorrespondenzen bei der Berechnung basierend auf den Gewichten unterschiedlich berücksichtigt werden;
- (S140) Bewerten der Leistung der berechneten planaren Homographien unter Verwendung einer Verlustfunktion;

wobei das Vorhersagemodell für optischen Fluss und das Gewicht-Vorhersagemodell gleichzeitig trainiert werden, um einen Ausgang von optischen Flusskorrespondenzen und Ausgangsgewichte bereitzustellen, sodass planare Homographen, die basierend auf einem Ausgang solcher optischer Flusskorrespondenzen und solcher Ausgangsgewichte berechnet werden, die Verlustfunktion minimieren, um eine vorbestimmte Leistung zu erlangen.

**7.** Verfahren nach Anspruch 6, wobei:

- die Verlustfunktion abhängig von der Differenz zwischen der berechneten Homographie und einer vorbestimmten Referenz-Homographie des Trainingsbildpaars ist.

**8.** Verfahren nach einem der Ansprüche 6 bis 7, wobei:

- das Trainingsbildpaar ein erstes Trainingsbild, das ausgewählt ist aus einem Trainingsdatensatz, und ein zweites Trainingsbild, das durch Anwenden einer vorbestimmten Verzerrungstransformation auf das erste Trainingsbild berechnet wird, umfasst.

**9.** Computerprogramm, umfassend Anweisungen, die, wenn das Programm von einem Computer ausgeführt wird, den Computer veranlassen, die Schritte des Verfahrens zur Verfolgung planarer Objekte nach einem der Ansprüche 1 bis 4 durchzuführen.

**10.** Computerlesbares Speichermedium, umfassend Anweisungen, die, wenn sie von einem Computer ausgeführt werden, den Computer veranlassen, die Schritte des Verfahrens zur Verfolgung planarer Objekte nach einem der Ansprüche 1 bis 4 durchzuführen.

**11.** Fahrzeug, umfassend ein System zur Verfolgung planarer Objekte nach Anspruch 5.

## Revendications

**1.** Procédé de suivi d'objet plan mis en œuvre par ordinateur pour suivre des objets entre une première image et une deuxième image, le procédé comprenant des étapes de :

- (S10) estimation dense de correspondances de flux optique entre la première image et la deuxième image sur la base de caractéristiques extraites de la première image et de la deuxième image ;
- (S20) assignation de pondérations aux correspondances de flux optique, la pondération de chaque correspondance de flux optique étant calculée pour caractériser une fiabilité de l'estimation de la correspondance de flux optique ;
- (S30) calcul d'homographie de plan entre la première image et la deuxième image sur la base des correspondances de flux optique,
dans lequel des correspondances de flux optique sont prises en compte différemment dans le calcul sur la base des pondérations, l'estimation dense des correspondances de flux optique (S10) comprenant l'utilisation d'une méthode LITEFLOWNET2 ; et
le calcul d'homographie de plan (S30) comprend le calcul d'une régression au moindre carré pondérée sur la base des pondérations des correspondances de flux optique.

**2.** Procédé selon la revendication 1, selon lequel :

- les pondérations des correspondances de flux optique sont comprises entre 0 et 1.

**3.** Procédé selon la revendication 1 ou 2, selon lequel :

- l'estimation dense des correspondances de flux optique (S10) comprend l'utilisation d'un modèle de prédicteur de flux optique ; et

- l'assignation de pondérations des correspondances de flux optique (S20) comprend l'utilisation d'un modèle de prédicteur de pondérations, chaque pondération étant calculée sur la base d'une représentation intérieure du modèle de prédicteur de flux optique.

**4.** Procédé selon la revendication 3, selon lequel :

- la représentation intérieure du modèle de prédicteur de flux optique est une matrice de volume de coût entre des caractéristiques extraites de la première image et des caractéristiques extraites de la deuxième image.

**5.** Système de suivi d'objet plan (10) destiné à suivre des objets entre une première image et une deuxième image, le système de suivi d'objet plan comprenant un ou plusieurs processeurs (12) et un support lisible par ordinateur (11) ; le support lisible par ordinateur (11) comprenant des instructions d'ordinateur stockées dessus, les instructions, lorsqu'elles sont exécutées par les un ou plusieurs processeurs, amenant les un ou plusieurs processeurs à mettre en œuvre les étapes de :

- utilisation d'un modèle de prédicteur de flux optique pour estimer des correspondances de flux optiques denses (S10) entre la première image et la deuxième image sur la base de caractéristiques extraites de la première image et de la deuxième image ;
- utilisation d'un modèle de prédicteur de pondérations pour assigner des pondérations (S20) aux correspondances de flux optique, la pondération de chaque correspondance de flux optique étant calculée pour caractériser une fiabilité de l'estimation de la correspondance de flux optique ;
- calcul d'une homographie de plan (S30) entre la première image et la deuxième image sur la base des correspondances de flux optique, les correspondances de flux optique étant prises en compte différemment dans le calcul sur la base des pondérations, l'estimation dense des correspondances de flux optique (S10) comprenant l'utilisation d'une méthode LITEFLOWNET2 ; et le calcul d'homographie de plan (S30) comprenant le calcul d'une régression au moindre carré pondérée sur la base des pondérations des correspondances de flux optique.

**6.** Procédé d'entraînement du système de suivi d'objet plan selon la revendication 5, comprenant des étapes de :

- (S100) fourniture d'une paire d'images d'entraînement ;
- (S110) estimation de correspondances de flux optique denses entre des images de la paire d'images d'entraînement en utilisant un modèle de prédicteur de flux optique ;
- (S120) assignation de pondérations aux correspondances de flux optique en utilisant un modèle de prédicteur de pondérations ;
- (S130) calcul d'une homographie de plan entre les images de la paire d'images d'entraînement sur la base des correspondances de flux optique, des correspondances de flux optique étant prises en compte différemment dans le calcul basé sur les pondérations ;
- (S140) évaluation des performances des homographies de plan calculées en utilisant une fonction de perte ;

le modèle de prédicteur de flux optique et le modèle de prédicteur de pondérations étant entraînés simultanément pour fournir des correspondances de flux optiques de sortie et des pondérations de sortie, de telle sorte que des homographies de plan calculées sur la base de ces correspondances de flux optique de sortie et de ces pondérations de sortie minimisent la fonction de perte afin d'obtenir des performances prédéterminées.

**7.** Procédé selon la revendication 6, selon lequel :

- la fonction de perte est une fonction d'une différence entre l'homographie calculée et une homographie de réalité du terrain prédéterminée de la paire d'images d'entraînement.

**8.** Procédé selon l'une quelconque des revendications 6 à 7, selon lequel :

- la paire d'images d'entraînement comprend une première image d'entraînement choisie parmi un ensemble de données d'entraînement et une deuxième image d'entraînement qui est calculée en appliquant une transformation de déformation prédéterminée sur la première image d'entraînement.

**9.** Programme informatique comprenant des instructions qui, quand le programme est exécuté par un ordinateur, amènent l'ordinateur à mettre en œuvre les étapes du procédé de suivi d'objet plan selon l'une quelconque des revendications 1 à 4.

**10.** Support de stockage lisible par ordinateur comprenant des instructions qui, lorsqu'elles sont exécutées par un ordinateur, amènent l'ordinateur à mettre en œuvre les étapes du procédé de suivi d'objet plan selon l'une quelconque des revendications 1 à 4.

**11.** Véhicule comprenant un système de suivi d'objet plan selon la revendication 5.

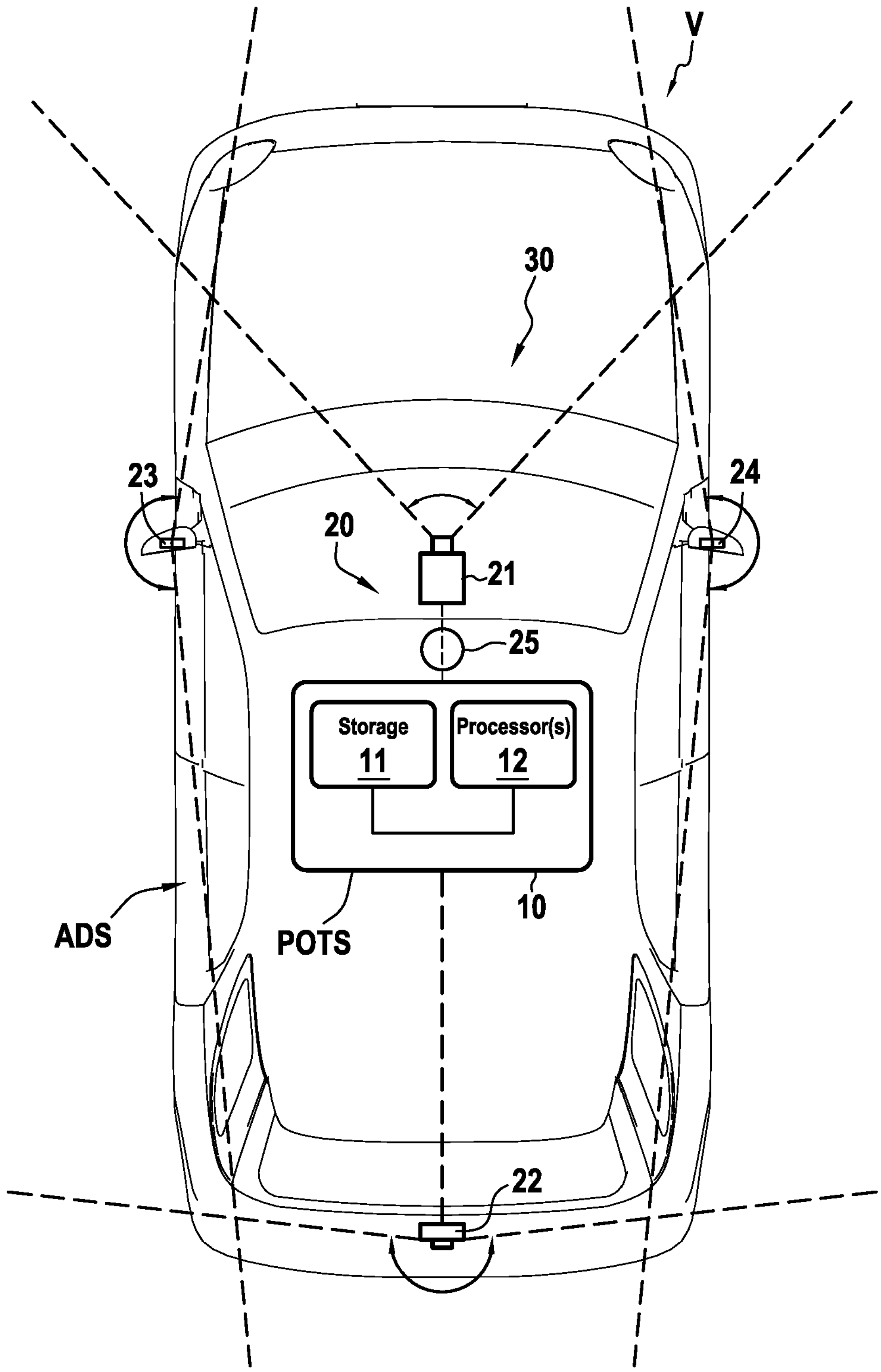


FIG.1

FIG.2

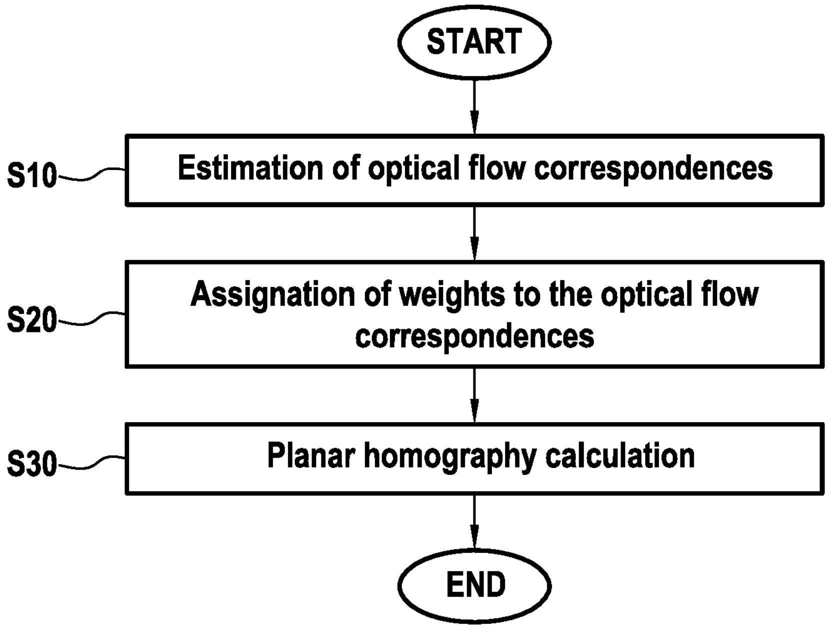
START
S10
Estimation of optical flow correspondences
S20
Assignation of weights to the optical flow correspondences
S30
Planar homography calculation
END

FIG.3

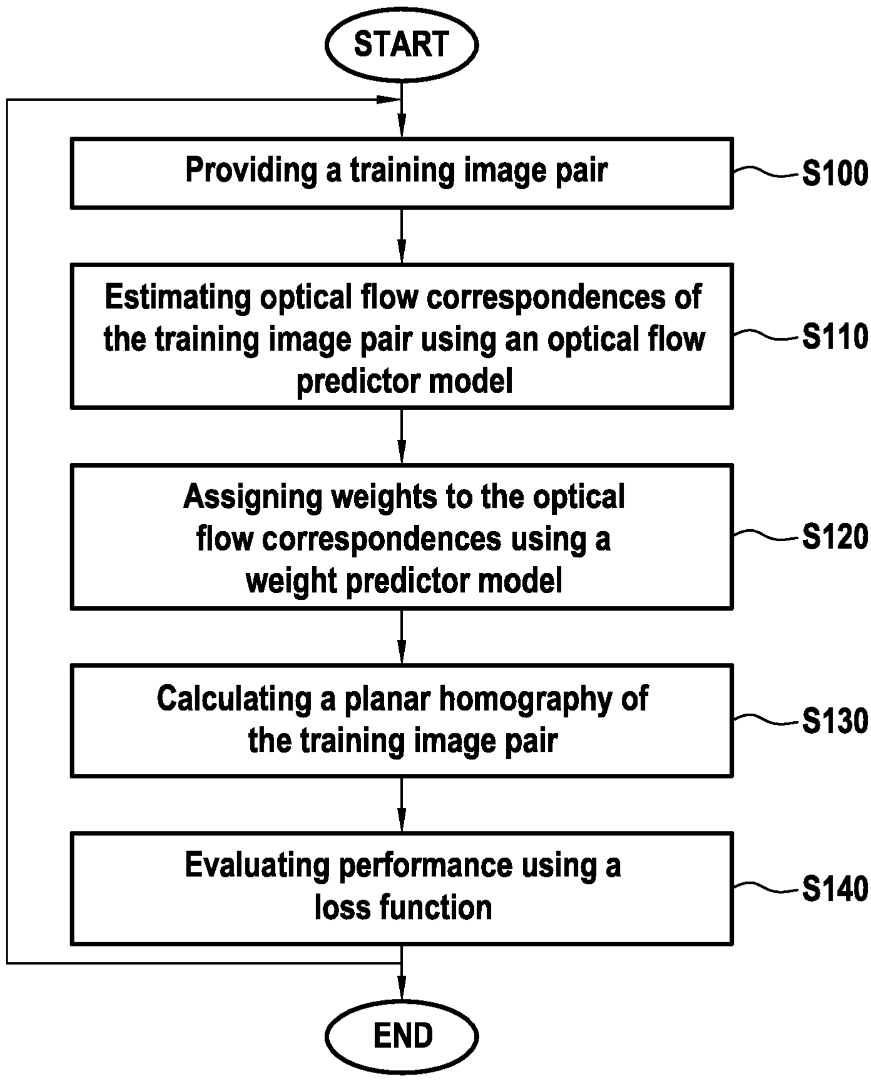
START
Providing a training image pair
S100
Estimating optical flow correspondences of the training image pair using an optical flow predictor model
S110
Assigning weights to the optical flow correspondences using a weight predictor model
S120
Calculating a planar homography of the training image pair
S130
Evaluating performance using a loss function
S140
END

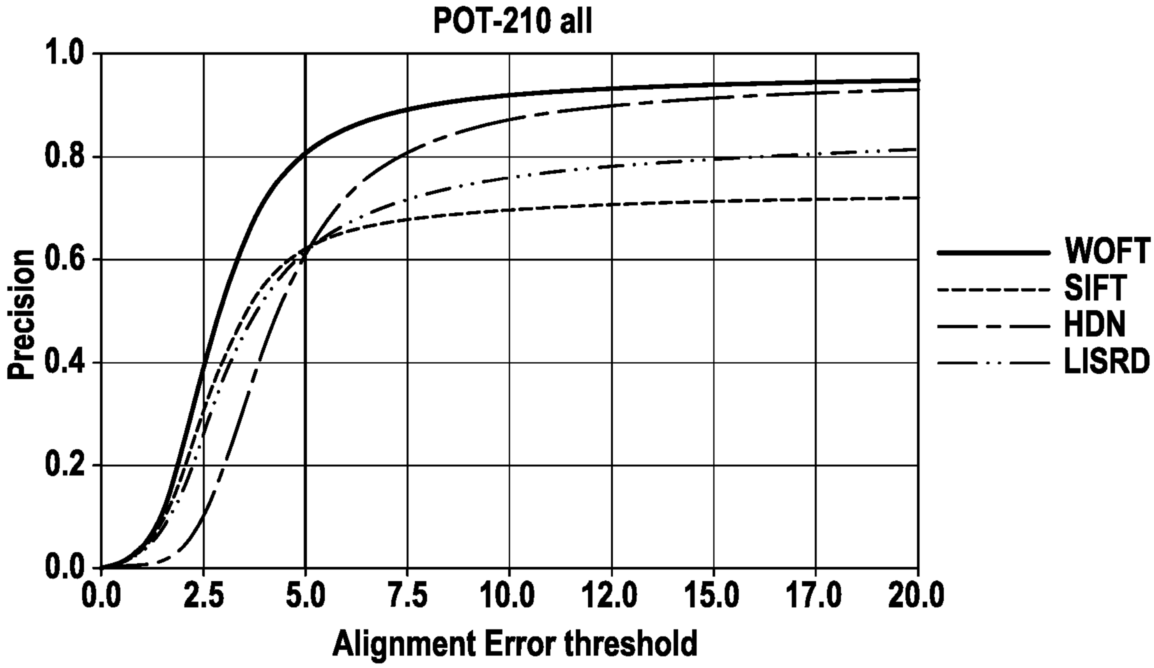
POT-210 all
1.0
0.8
0.6
0.4
0.2
0.0
Precision
0.0
2.5
5.0
7.5
10.0
12.0
15.0
17.0
20.0
Alignment Error threshold
WOFT
SIFT
HDN
LISRD

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ANASTASIIA MISHCHUK** ; **DMYTRO MISHKIN** ; **FILIP RADENOVIC** ; **JIRI MATAS**. Working hard to know your neighbor's margins: Local descriptor learning loss. *In Advances in Neural Information Processing Systems*, 2017, 4826-4837
- **DAVID G LOWE**. Distinctive image features from scale-invariant keypoints. *International journal of computer vision*, 2004, vol. 60 (2), 91-110
- **DANIEL DETONE** ; **TOMASZ MALISIEWICZ** ; **ANDREW RABINOVICH**. Deep image homography estimation. *arXiv preprint arXiv:1606.03798*, 2016
- **MARTIN A FISCHLER** ; **ROBERT C BOLLES**. Random sample consensus: a paradigm for model fitting with applications to image analysis and automated cartography. *Communications of the ACM*, 1981, vol. 24 (6), 381-395
- **MAKSYM IVASHECHKIN** ; **DANIEL BARATH** ; **JIRI MATAS**. USACv20: robust essential, fundamental and homography matrix estimation. *In Proceedings of the 25st Computer Vision Winter Workshop Conference*, 2020
- **LOWE, D.G**. Distinctive Image Features from Scale-Invariant Keypoints. *International Journal of Computer Vision*, 2004, vol. 60, 91-110
- SURF: Speeded Up Robust Features. In: Leonardis A., Bischof H., Pinz A. (eds) Computer Vision - ECCV 2006. ECCV 2006. **BAY H.** ; **TUYTELAARS T.** ; **VAN GOOL L**. Lecture Notes in Computer Science. Springer, 2006, vol. 3951
- RPT: Learning point set representation for Siamese visual tracking.. **MA, Z., WANG** ; **L., ZHANG** ; **H., LU, W.** ; **YIN, J**. In European Conference on Computer Vision. Springer, August 2020, 653-665
- **R. RICHA** ; **R. SZNITMAN** ; **R. TAYLOR** ; **G. HAGER**. Visual tracking using the sum of conditional variance. *2011 IEEE/RSJ International Conference on Intelligent Robots and Systems*, 2011, 2953-2958
- **LIANG, P.** ; **JI, H** ; **WU, Y** ; **CHAI, Y** ; **WANG, L** ; **LIAO, C.** ; **LING, H**. Planar object tracking benchmark in the wild. *Neurocomputing*, 2021, vol. 454, 254-267
- **CHEN, L.** ; **LING, H** ; **SHEN, Y.** ; **ZHOU, F.** ; **WANG, P.** ; **TIAN, X.** ; **CHEN, Y**. Robust visual tracking for planar objects using gradient orientation pyramid. *Journal of Electronic Imaging*, 2019, vol. 28 (1), 013007
- Raft: Recurrent all-pairs field transforms for optical flow.. **TEED, Z.** ; **DENG, J.** In European conference on computer vision. Springer, August 2020, 402-419
- **HUI, T. W** ; **TANG, X.** ; **LOY, C. C**. A lightweight optical flow CNN-Revisiting data fidelity and regularization. *IEEE transactions on pattern analysis and machine intelligence*, 2020, vol. 43 (8), 2555-2569
- Planar object tracking in the wild: A benchmark. **LIANG, P** ; **WU, Y** ; **LU, H.** ; **WANG, L.** ; **LIAO, C.** ; **LING**. In 2018 IEEE International Conference on Robotics and Automation (ICRA. IEEE., May 2018, 651-658
- **ZHAN, X.** ; **LIU, Y.** ; **ZHU, J** ; **LI, Y**. Homography decomposition networks for planar object tracking. *In Proceedings of the AAAI Conference on Artificial Intelligence*, June 2022, vol. 36 (3), 3234-3242
- **CHEN** ; **ZHENG** ; **FANG** ; **XIAO-NAN** ; **ZHANG** ; **SONG-HAI**. Local homography estimation on user-specified textureless regions. *Journal of Computer Science and Technology*, 2022, vol. 37 (3), 615-625
- **TEED** ; **ZACHARY** ; **DENG** ; **JIA**. Raft: Recurrent all-pairs field transforms for optical flow. *In : Computer Vision-ECCV 2020: 16th European Conference, Glasgow, UK, August 23-28, 2020, Proceedings, Part II 16. Springer International Publishing*, 2020, 402-419
- Hvc-net: Unifying homography, visibility, and confidence learning for planar object tracking. **ZHANG** ; **HAOXIAN** ; **LING** ; **YONGGEN**. In : European Conference on Computer Vision. Cham. Springer Nature, 2022, 701-718
- Microsoft COCO: Common objects in context. **LIN, T. Y.** ; **MAIRE, M.** ; **BELONGIE, S. et al.** In European conference on computer vision. Springer, September 2014, 740-755